# EUROPEAN PATENT APPLICATION

(11) **EP 2 570 208 A2**
(43) Date of publication of application: **20.03.2013**
(21) Application number: 12184013.6
(22) Date of filing: 12.09.2012
(51) Int. Cl.: B23B 3/22, B23B 3/30

(54) **Work grip device and work transfer method of lathe turning machine**

(30) Priority: 13.09.2011 JP 2011199756
(71) Applicant: Nakamura-Tome Precision Industry Co., Ltd., Hakusan-shi, Ishikawa (JP)
(72) Inventor: Takakura, Kenichi, Hakusan-shi, Ishikawa (JP); Nakamura, Nobuhide, Hakusan-shi, Ishikawa (JP)
(74) Representative: Isarpatent

(57) **Abstract**

A work grip device which is installed to a tool turret, and a transfer method of a work in an inner portion of a lathe turning machine using the grip device are provided without arranging a drive source in the work grip device, and an electric wiring and a hydraulic pressure piping to a turret which moves and index rotates. The work grip device is provided with an opening and closing jaws which are driven so as to be opened and closed on the basis of a rotation of a tool motor. A holder of the work grip device is provided with an input shaft which is connected to a tool drive shaft within a turret head by the same structure as a rotary tool at a time of being attached to the tool turret, and is provided with a motion converting mechanism converting a forward and reverse rotation of the input shaft into an opening and closing motion of the opening and closing jaws of the grip device which is provided in the holder.

## Description

### BACKGROUND OF THE INVENTION

### Field of the Invention

This invention relates to a work grip device which is installed to a tool attaching portion of a tool turret in place of a tool, and a method of transferring the work in an inner portion of a lathe turning machine by using the work grip device.

### Description of the Conventional Art

A tool turret (hereinafter, refer simply to as "turret") of a machine tool is provided with a turret head having a plurality of tool attaching portions in an outer peripheral portion, indexes the tool which is used for an occasional process toward the work by intermittently rotating (index rotating) the turret head, and carried out a processing of the work by the indexed tool on the basis of a relative movement of the work and the turret. The turret which can attach a rotary tool such as a drill, a milling cutter or the like is provided with a tool drive shaft which is embedded in the turret head, and a tool motor which rotationally drives the tool drive shaft.

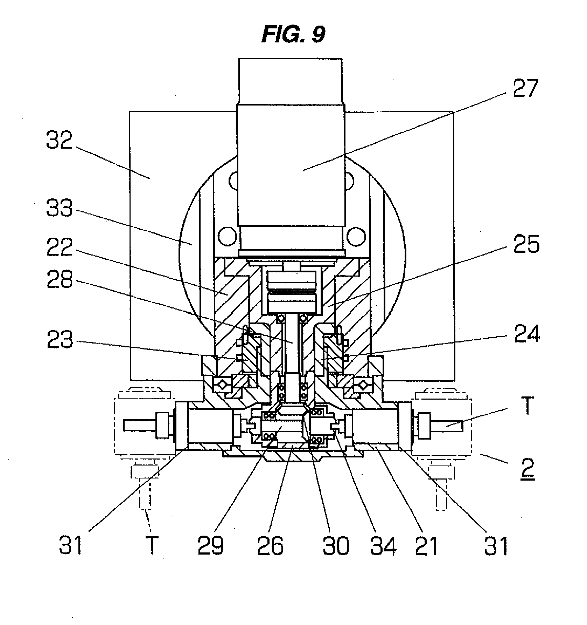

Fig. 9 shows a conventional turret mentioned above, and the turret is disclosed in Japanese Unexamined Patent Publication No. 2003-311501 filed by the applicant of the present application. In Fig. 9, a turret 2 is installed to a cutting tool post 32 via a turning apparatus 33 which is positioned in a turning manner around a turning axis (a direction of an axis B) in a direction perpendicular to the paper surface. A turret head 21 of the turret 2 is fixed to a shaft end of an index shaft 24 which is rotationally driven by an index motor (not shown), and is structured such that an indexed position can be fixed by a face gear coupling (a face coupling) 23 which is provided between a casing 22 fixed to the turning apparatus 33 and the turret head 21. The index shaft 24 is constructed by a hollow shaft, a fixed shaft 25 in which a base end is fixed to the casing 22 is inserted to a center hole thereof, and an inner case 26 which is provided within the turret head 21 is fixed to a leading end of the fixed shaft 25. The fixed shaft 25 is also constructed by a hollow shaft, and a transmission shaft 28 which is rotationally driven by a tool motor 27 is inserted to a center hole thereof.

A tool drive shaft 29 in a diametrical direction of the turret head 21 is rotatably supported with respect to the inner case 26. The tool drive shaft 29 is coupled to a shaft end of the transmission shaft 28 by a bevel gear pair 30. When a rotary tool T installed to the turret head 21 moves to an indexed position which processes the work, a tool shaft within the rotary tool holder is fitted to a leading end of the tool drive shaft 29 so as to be rotationally driven. In the case of processing a screw by using a screw forming tool, a rotation is inverted at a time of pulling out the screw forming tool. Accordingly, a reversible motor is used as the tool motor 27.

On the other hand, there has been provided a work grip device which is used by being attached to a tool attaching portion 31 of the turret. This kind of work grip device is structured such that a holder fixed to the tool attaching portion of the turret is provided with opening and closing jaws (a chuck and a finger) which grip the work, and an opening and closing apparatus thereof. It is possible to carry out an easy transfer of the work in an inner portion of the machine tool, for example, the transfer of the work between a plurality of main shafts, between a main shaft and a carry-in apparatus or a carry-out apparatus of the work, by attaching this kind of work grip device to one of the tool attaching portions of the turret.

As a drive source of the opening and closing apparatus in this kind of work grip device, a motor or a cylinder has been conventionally used, and as an opening and closing mechanism, for example, there has been employed a mechanism of converting a forward and backward motion of a screw which is rotationally driven by the motor or a forward and backward motion of a rod of the pneumatic cylinder into an opening and closing motion of the opening and closing jaws by a cam or a link.

The work grip device which opens and closes the opening and closing jaws on the basis of an electricity or a hydraulic pressure requires a wiring or a piping which supplies the electricity or the hydraulic pressure to the turret head which index rotates, and a structure of the turret becomes significantly complicated accordingly.

As a work grip device which grips a columnar work by a simple structure, there is a structure which energizes the opening and closing jaws in a closing direction by a spring.

In a work grip device which has an electric motor or a hydraulic pressure as a drive source, an electric wiring or a fluid piping for supplying an electricity or a hydraulic pressure is necessary in a turret head which index rotates via a cutting tool post moving in a two-dimensional plane or a three-dimensional space, and a structure of the turret becomes complicated. Further, a movement of the cutting tool post and a rotation of the turret head are limited by the wiring or the piping, and there is generated such a necessity that a coupler or the like disconnecting the electric wiring or the fluid piping at a time of index rotating the turret head is provided.

On the other hand, in the structure which grips the work by the energizing force of the spring, the structure of the work grip device is simple and does not complicate the structure of the turret, however, since the grip of the work is carried out while the opening and closing jaws which are energized in the closing direction slips on a surface of the work, there is a risk that the work is scratched, and it is hard to control a grip force and accurately set an open position of the work. Further, there is a problem that a shape of the work which can be gripped is limited, and a general purpose property runs short.

The turret structured such that it can install the rotary tool such as the drill, the milling cutter or the like includes a tool drive shaft which transmits a rotating force to the tool which is indexed toward the work, and the tool drive shaft is driven by a servo motor. This invention provides a work grip device provided with an opening and closing jaws which are opened and closed by a rotation of a tool motor, by paying attention to this matter.

A work grip device 5 in accordance with this invention is provided with a holder 51 (51a, 51b) which is fixed to a tool attaching portion 31 of a turret. The holder 51 is provided with an input shaft 54 which has the same structure as the rotary tool and is connected to a tool drive shaft 29 within a turret head 21, at a time of being attached to the tool attaching portion 31. Further, it is provided with a motion converting mechanism, for example, a rack and pinion mechanism 57 and 59 or a spiral cam mechanism 62 and 63 which converts a forward and reverse rotation of the input shaft 54 into an opening and closing motion of an opening and closing jaws 58 of the work grip device 5.

A cutting tool post which mounts the turret thereon can move in directions of an axis X and an axis Z, and further in a direction of an axis Y in a lathe turning machine, and a moving position is accurately controlled by an NC apparatus. Therefore, it is possible to accurately control a work grip position and a work release position. Further, in a machine tool in which a servo motor is used as a tool motor, it is possible to adjust a grip force of the work and to control an opening and closing stroke of the opening and closing jaws in correspondence to a work dimension, on the basis of a rotating angle control and a torque control of the tool motor.

A transfer method of a work in the lathe turning machine in accordance with this invention is characterized by installing the work grip device 5 of this invention to one of the tool attaching portions 31 of the turret 2, carrying out the opening and closing motion of the opening and closing jaws at a time of carrying out the grip and release of the work on the basis of a rotating angle control and a torque control of the tool motor, and carrying out a transfer of the gripped work on the basis of a movement in the directions of the axes Z, X and Y of the turret 2 installing the grip device 5 and a turning motion around the axis Y (a direction of an axis B).

If the work grip device 5 in accordance with this invention is used, it is possible to freely and accurately set the opening and closing stroke and the work grip force of the opening and closing jaws 58 by controlling the rotating direction, the rotating angle and the rotating torque of the tool motor 27 in accordance with a processing program, whereby it is not necessary to arrange the electric wiring or the fluid piping in the turret.

In this case, in the lack and pinion mechanism 57 and 59 and the spiral cam mechanism 62 and 63, since an opening and closing amount of the opening and closing jaws 58 with respect to the rotating angle of the tool motor and a grip force with respect to a torque of the tool motor are not changed by the position of the opening and closing jaws 58, it is easy to control a stroke and a grip force of the opening and closing jaws 58 in accordance with the processing program.

If the work grip device 5 in accordance with this invention is installed to one position of the tool attaching portion 31 of the turret 2 which is provided with the drive apparatus of the rotary tool, it is possible to carry out the transfer of the work with respect to the main shaft by opening and closing the opening and closing jaws 58 by the tool motor toward the work in which the work grip device 5 is retained in the main shaft, and it is possible to carry out the transfer of the work in the inner portion of the machine tool by moving the turret in a state of gripping the work.

Since the opening and closing of the opening and closing jaws of the work grip device attached to the turret is carried out by the tool motor of the turret, it is not necessary to arrange the drive source such as an electric motor or a pneumatic cylinder for opening and closing in the work grip device, so that the structure of the work grip device is simplified, and it is possible to transfer the work with respect to the main shaft or the carry-in and carry-out apparatuses of the work without arranging the electric wiring or the hydraulic pressure piping to the turret which moves and index rotates.

### BRIEF EXPLANATION OF THE DRAWINGS

Fig. 1 is a schematic side elevational view showing an internal structure of a work grip device in accordance with a first embodiment;
Fig. 2 is a front elevational view of Fig. 1;
Fig. 3 is a schematic side elevational view showing an internal structure of a work grip device in accordance with a second embodiment;
Fig. 4 is a front elevational view of Fig. 3;
Fig. 5 is a schematic front elevational view showing an internal structure of a work grip device in accordance with a third embodiment;
Fig. 6 is a schematic front elevational view showing an example of a lathe turning machine to which the work grip device in accordance with the first embodiment is installed;
Fig. 7 is an explanatory view of a discharge motion of a work in the lathe turning machine in Fig. 6;
Fig. 8 is an explanatory view of a supply motion of the work in the lathe turning machine in Fig. 6; and
Fig. 9 is a cross sectional view showing an example of a turning tool turret.

### DETAILED DESCRIPTION OF PREFERRED EMBODIMENT

Next, a description will be given of a work grip device in accordance with this invention and a transfer motion of a work using the same, with reference to the accompanying drawings.

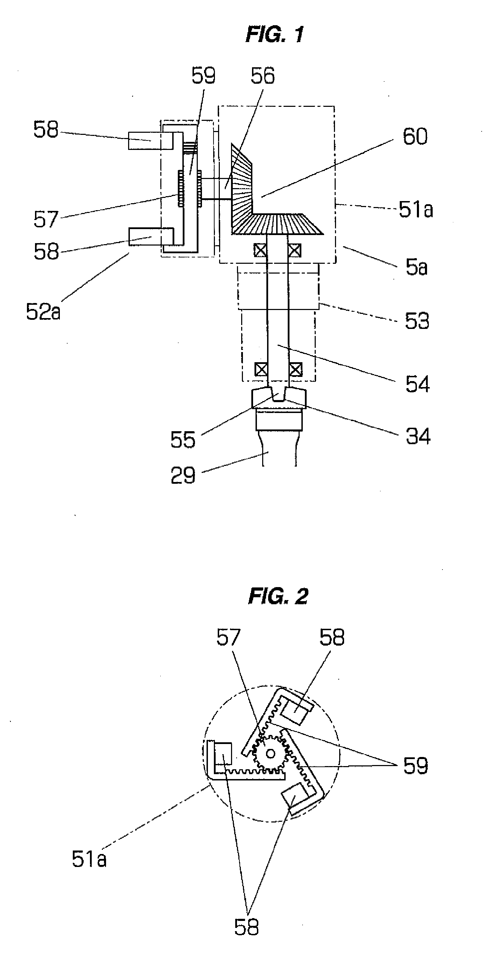

Figs. 1 and 2 show a first embodiment of the work grip device in accordance with this invention, and show the example in which a chuck 52a having three jaws is provided in an angle holder 51a which is attached to a tool attaching portion 31 (Fig. 9) of a turret by a bolt or the like. The holder 51a is provided with a cylinder portion 53 fitted to a fitting hole which is provided in the tool attaching portion 31 of the turret, and an input shaft 54 is axially supported to an axis of the cylinder portion so as to be freely rotatable. A leading end of the input shaft 54 protrudes out of an end surface of the cylinder portion 53, and the leading end is provided with a tongue (a tongue piece) 55 fitted to a connection groove 34 (refer to Fig. 1) in a diametrical direction which is provided in a leading end of a tool drive shaft 29 within the turret head.

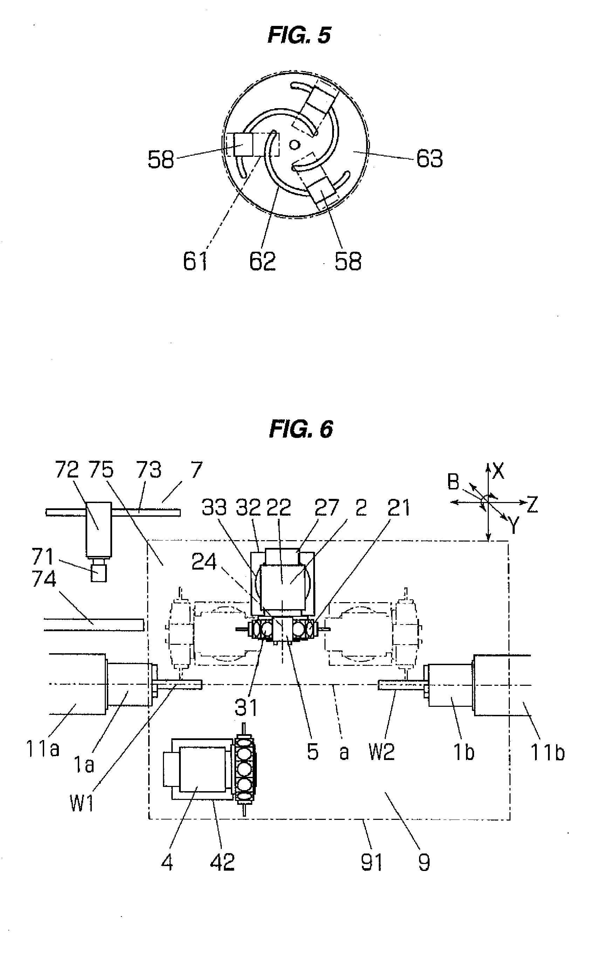

The chuck 52a having threejaws is attached to one side surface of the holder 51a, and an orthogonal shaft 56 is axially supported onto a center axis of the chuck so as to be freely rotatable. A pinion 57 is fixed to a leading end of the orthogonal shaft 56, and a rack 59 which is fixed to each of jaws 58 of the chuck 52 and extends toward a center side of the chuck is engaged with the pinion 57. A base end of the input shaft 54 and a base end of the orthogonal shaft 56 are connected by a bevel gear pair 60. Each of the opening and closing jaws 58 of the chuck is guided by a guide 61 (refer to Fig. 5) in such a manner as to move in a radial direction, and three pening and closing jaws 58 are synchronously opened and closed on the basis of a forward and reverse rotation of the input shaft 54.

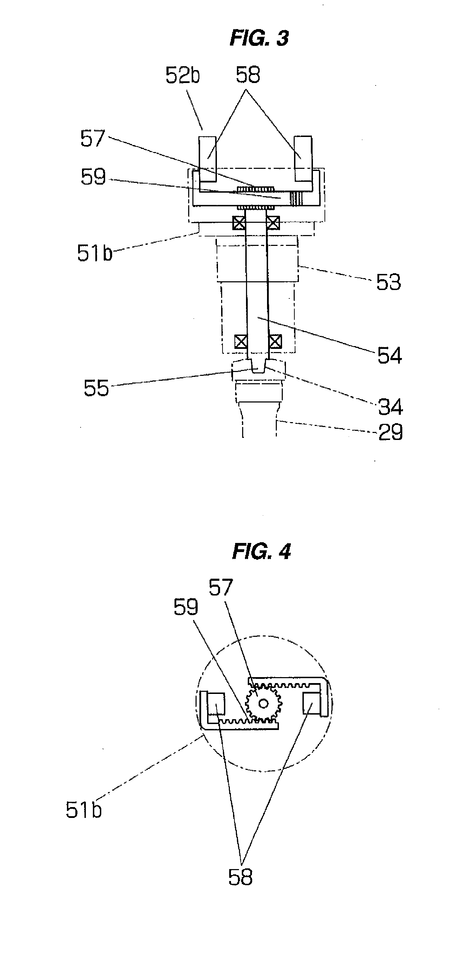

Figs. 3 and 4 show a second embodiment of the work grip device in accordance with this invention, and show the example in which a finger 52b is provided in a straight holder 51b which is attached to the tool attaching portion 31 of the turret. The input shaft 54 is rotatably supported with respect to the holder 51b by the same structure as the first embodiment, and is provided in a base end thereof with a pinion 57. Further, a rack 59 which is fixed to each of the opposed opening and closing jaws 58 is engaged with the pinion 57. The opposed opening and closing jaws 58 of the finger 52b are guided by guides in a direction of being close to and away from each other, and the opening and closing jaws 58 are synchronously opened and closed on the basis of the forward and reverse rotation of the input shaft 54.

In the example mentioned above, the forward and reverse rotation of the input shaft 54 is converted into the opening and closing motion of the opening and closing jaws 58 by the rack and pinion, however, it is possible to employ the same structure as a scroll chuck which is widely used actually. In other words, as shown in Fig. 5, the structure may be made such as to synchronously open and close the opening and closing jaws 58 which are guided by the linear guide 61 in the radial direction and is slidably engaged with the spiral groove 62, on the basis of a forward and reverse rotation of a cam disc 63 which is provided with a spiral groove 62.

Fig. 6 to Fig. 8 show an example of a transfer method of the work by the work grip device 5 in accordance with this invention, by using a two main shaft and two turrets lathe turning machine as an example. The lathe turning machine shown in the drawings is provided with two main shafts (not shown) which are opposed on a main shaft axis a, and turrets 2 and 4 which are arranged above and below the main shaft axis a, respectively. A main shaft table 11a of the main shaft in a left side as seen from an operator is provided so as to be fixed to a bed, and a main shaft table 11b of the main shaft in a right side is provided so as to be movable along the main shaft axis a.

The turret (hereinafter, refer to as "turning turret") 2 arranged above the main shaft axis a is a turret having a structure shown in Fig. 9, and a tool motor 27 thereof is a servo motor which can control a rotating angle and a rotating torque by the NC apparatus. The turning turret 2 is installed to an upper cutting tool post 32 which can be moved and positioned in a direction of an axis Z which is a direction of the main shaft axis, a direction of an axis X which is orthogonal to this and is a feeding direction of the tool, and a direction of an axis Y which is orthogonal to both the directions via a turning apparatus 33 which is turned and positioned around the axis Y (a direction of an axis B). The turret (a lower turret) 4 arranged below the main shaft axis a is installed to a lower cutting tool post 42 which is moved and positioned in the directions of the axis Z and the axis X so as to set an index axis to the direction of the axis Z.

Reference numeral 7 denotes a carry-in and carry-out apparatus of the processed work. The carry-in and carry-out apparatus 7 in the drawing is structured such that an elevating apparatus 72 provided with a hand 71 gripping the work in a lower end reciprocates along a guide 73 in the direction of the axis Z. The carry-in and carry-out apparatus 7 grips a raw material work on a stocker 74 by the hand 71, and carries in the raw material work to a work transfer position 75 which is set in a moving end of the hand 71 on the basis of an ascent of the hand 71 and a movement along the guide 73. Further, the carry-in and carry-out apparatus 7 carries out the processed work received at the work transfer position 75 onto the stocker 74 on the basis of an inverse motion to that at a time of carrying in. The work transfer position 75 is set to an inner side of a peripheral portion of a work processing region 9 which is surrounded by a partition wall 91 and a shutter.

The grip device 5 having an angle chuck structure shown in Fig. 1 is installed to one position of the tool attaching portion of the turning turret 2. The process of the work is carried out in parallel by using the tool which is installed to the turning turret 2 and the tool which is installed to the lower turret 4, in a state in which the works W1 and W2 are retained respectively by the first chuck 1a which is provided in the main shaft in the left side of Fig. 1 and the second chuck 1b which is provided in the main shaft in the right side.

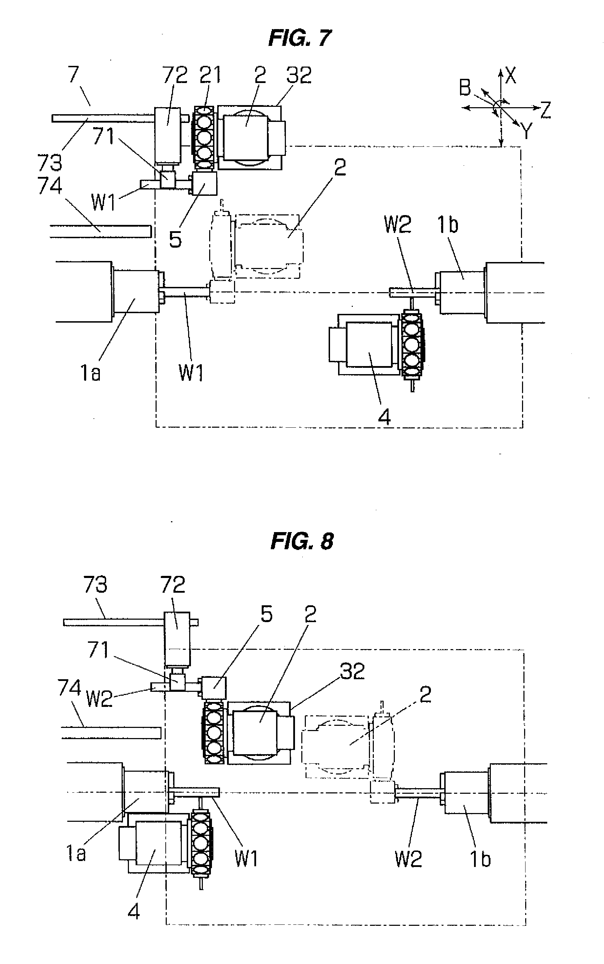

When the process of the work W2 in the second chuck is finished, the turning turret 2 directs the grip device 5 installed to the turret to the work W2 side, on the basis of the turning in the direction of the axis B (hereinafter, refer to as "B turning") and the index rotation of the turret head 21, and makes the grip device 5 be opposed to the work W2 on the basis of the movement in the directions of the axes Z, X and Y of the upper cutting tool post 32 (an imaginary line in Fig. 8). Further, it receives the work W2 by closing the opening and closing jaws 58 and opening the second chuck 1b, moves to a position shown by a solid line in Fig. 8 on the basis of the Z-X-Y movement and the B turning, and gives the processed work W2 to the hand 71 of the carry-in and carry-out apparatus at the transfer position 75.

In a stage that the process of the work W1 of the first chuck is finished, and the turning turret 2 carrying out the discharge motion of the work W2 leaves a region which interferes with the second main shaft table 11b, the second main shaft table 11b moves forward to the first main shaft table 11a side, the second chuck 1b retains the leading end of the work W1, and the second main shaft table 11b moves backward after the first chuck 1a is opened, whereby the work W1 is transferred to the second chuck 1b from the first chuck 1a.

During this time, the turning turret 2 makes the grip device 5 be opposed to the raw material work W1 which is carried in at the transfer position 75 by the carry-in and carry-out apparatus (a solid line in Fig. 7), and closes the opening and closing jaws 58, thereby gripping the raw material work W1. Further, on the basis of the Z-X-Y axes movement and the B turning, it makes the gripped raw material work W1 be opposed to the first chuck 1a (an imaginary line in Fig. 7), and further moves in the direction of the axis Z so as to insert the raw material work W1 into the first chuck 1a. At this time, it is possible to press the raw material work W1 against the first chuck 1a with a desired force by applying a torque limit to the feed motor in the direction of the axis Z of the upper cutting tool post 32. Further, the supply of the work is finished by closing the first chuck and opening the grip device 5 so as to evacuate the grip device 5 from the main shaft axis. During the supply motion of the work by the turning turret 2, it is possible to carry on the process of the work W2 of the second chuck by the tool of the lower turret 4.

In the lathe turning machine provided with the two main shaft opposed or the rotary tool, in order to transfer the work and set the processing position by the rotary tool, a phase control of the chucks 1a and 1b (a rotating angle control of the chuck around the main shaft axis a) is necessary. Accordingly, it is possible to set a phase of the work to a desired phase so as to supply to the first chuck 1a, by making the raw material work be carried in at the transfer position 75 with a fixed phase.

The supply and discharge motion of the work by the turning turret 2 mentioned above can be all controlled by the processing program of the NC apparatus in the machine tool side. Further, an interference check between the grip device 5 during the supply and discharge and the partition wall 91 or the chucks 1a and 1b and the work fixed thereto can be checked by utilizing an interference check function of the tool mounted to the NC apparatus of the machine tool, and can prevent a collision. Further, in the lathe turning machine which is provided with two main shafts and a plurality of cutting tool posts, since it is possible to carry on the process of the work which is fixed to the other chuck during the supply and discharge motion of the work by the turning turret 2, a processing efficiency of the work is not lowered.

## Claims

1. A work grip device comprising:
a holder which is installed to a tool attaching portion of a tool turret provided with a tool drive shaft which drives a rotary tool;
an input shaft which is rotatably supported with respect to the holder so as to be freely rotatable, a leading end of which is connected to said tool drive shaft at a time when said holder is installed to said tool turret and indexed to a work processing position; and
opening and closing jaws which are opened and closed by using a rotation of the input shaft as a drive source.

2. A work grip device as claimed in claim 1, wherein a converting mechanism converting a forward and reverse rotating motion of said input shaft or an orthogonal shaft which is rotationally connected to the input shaft into an opening and closing motion of said opening and closing jaws are constructed by a rack and pinion mechanism.

3. A transfer method of a work in a lathe turning machine wherein said lathe turning machine comprises:
a main shaft which retains the work and rotates;
a cutting tool post which is capable of moving and positioning in a direction of an axis Z which is parallel to a main shaft axis, a direction of an axis X which is a cutting direction of a tool and a direction of an axis Y which is orthogonal to both the axes;
a tool turret which is installed to the cutting tool post via a turning apparatus which is turned and positioned at least at 90 degree around the axis Y, the tool turret being indexed and rotated around an axis which is parallel to a plane X-Z; and
a tool drive shaft which is provided in the tool turret,
wherein the method comprises the steps of;
installing the work grip device as claimed in claim 1 or 2 to the tool attaching portion of said tool turret,
arranging a carrier apparatus which carries in or out the work at a predetermined position of a peripheral edge portion in a moving region of said turret, and
carrying out a supply or a discharge of the work between said predetermined position and the main shaft on the basis of an opening and closing motion of the opening and closing jaws of said grip device, a moving motion of said cutting tool post, a turning motion of said turning apparatus and an index rotating motion of the tool turret.
